# EUROPÄISCHE PATENTSCHRIFT

(11) **EP 0 291 762 B1**
(45) Veröffentlichungstag und Bekanntmachung des Hinweises auf die Patenterteilung: **03.02.1993**
(21) Anmeldenummer: 88107124.5
(22) Anmeldetag: 04.05.1988
(51) Int. Cl.: H02B 13/02

(54) **Metallgekapselte, mit Druckgas gefüllte, mehrphasige Hochspannungsschaltanlage**
Metal-clad, gas filled, multiphase high voltage switchgear
Installation de commutation polyphasée haute tension blindée à isolation gazeuse

(30) Priorität: 06.05.1987 DE 3715053
(43) Veröffentlichungstag der Anmeldung: 23.11.1988
(73) Patentinhaber: AEG Sachsenwerk GmbH, D-93053 Regensburg (DE)
(72) Erfinder: Reichl, Erwin, Dipl.-Ing(FH), D-8409 Tegernheim (DE); Heinzelmann, Werner, D-8400 Regensburg (DE)
(74) Vertreter: Breiter, Achim, Dipl.-Ing.

(56) Entgegenhaltungen:
- EP-A- 0 093 225
- DE-A- 3 215 236
- DE-A- 3 235 800

## Beschreibung

Die Erfindung bezieht sich auf eine metallgekapselte, mit Druckgas gefüllte, mehrphasige Hochspannungsschaltanlage gemäß dem Oberbegriff des Anspruchs 1. Derartige Anlagen sind aus der DE-A-321 5236 und EP-A-0093225 bekannt.

Unter der Bezeichnung "Stahlblechgeschottete, SF6-isolierte Schaltanlage Typenreihe ZV2" der Firma CALOR-EMAG ist gemäß Druckschrift 1376/H eine Schaltanlage bekannt geworden, auf die die Merkmale des Oberbegriffs zutreffen. Sie besteht aus mehreren in sich geschlossenen, und somit gegeneinander geschotteten, quaderförmigen Bausteinen, die jeweils einen Funktionsraum, z.B. einen Sammelschienenraum beinhalten. Um eine vollständige Schaltanlage zusammenstellen zu können, müssen die Bausteine mehrerer Funktionsräume unter Zwischenschaltung von gasdichten Durchführungen zusammengefügt werden.

Durch die Verwendung von quaderförmigen Gehäusen können bei der bekannten Schaltanlage deren einfache Gerüste mit ebenen Blechen gekapselt werden. Um die im Betrieb bzw. bei Störungen auftretenden Drücke sicher beherrschen zu können, ohne dabei die Blechstärke der Kapselung zu dick ausführen zu müssen, werden letztere durch zusätzliche Maßnahmen, z.B. durch an der Innen- oder Außenseite angeschweißte Rippen versteift.

Die quaderförmigen Gehäusebausteine lassen bei der bekannten Anlage zu, alle drei Sammelschienen eines Systems in einer parallel zur nächstliegenden Abdeckung verlaufenden Ebene anzuordnen. Da die ebenfalls in diesem Baustein angeordneten Sammelschienentrennschalter phasenweise nach den Polen des Leistungsschalters ausgerichtet sind, sind die Verbindungsleitungen zwischen den Sammelschienen und den Trennschalterpolen verschränkt bzw. gekreuzt. Dadurch haben die Sammelschienenräume eine verhältnismäßig große Tiefe und sind deshalb oberhalb oder unterhalb des Schalterraumes angeordnet.

Die Erfindung hat sich zur Aufgabe gestellt, eine Hochspannungsanlage der angegebenen Art durch möglichst kompakte Bauweise und kurze, einfach gestaltete Verbindungsleitungen im Aufbau und in der Herstellung zu verbessern und wirtschaftlicher zu gestalten.

Die Aufgabe wird durch die kennzeichnenden Merkmale des ersten Patentanspruchs gelöst. In den Unteransprüchen sind vorteilhafte Weiterbildungen des Erfindungsgedankens angegeben.

Durch die erfindungsgemäße Leitungsführung ergeben sich eine Reihe von Vorteilen gegenüber der bekannten Schaltanlage und ähnlichen eingeführten Produkten; von denen im folgenden die wichtigsten aufgezählt sind:
a) Die Tiefe des Sammelschienenraumes läßt sich aufgrund der geradlinigen, ungekreuzten Leitungsführung minimieren.
b) Der Abstand zwischen den Strombahnen der Trenn- bzw. Dreistellungsschalter ist auf Grund der Diagonalanordnung bei gegebener Sammelschienenteilung deutlich größer als bei der bekannten Schaltanlage. Dadurch wird die Gefahr des elektrischen Überschlags und somit die Einleitung einer Störung im Sammelschienenraum deutlich reduziert, auch wenn man berücksichtigt, daß die Teile der Strombahnen an einzelnen Stellen hochspannungstechnisch ungünstig ausgebildet sein können.
c) Durch die kreuzungsfreie Anordnung der elektrischen Verbindungen innerhalb der Schotträume ist nach einem Unteranspruch die Anbringung geerdeter Zwischenwände zur phasenweisen Trennung der Leitungen möglich. Dies erhöht die Verfügbarkeit der Schaltanlage wesentlich, da im Störungsfall keine stromstarken Phasenüberschläge, sondern lediglich Erdschlußlichtbögen wie bei einphasiger Kapselung auftreten können. Außerdem sind die Phasenzwischenwände erfindungsgemäß sich kreuzend mit der Schottwand verbunden und versteifen diese in besonderem Maße. Dadurch können im Störungsfall keine Verformungen und somit auch keine Undichtheiten an den Einschraubstellen der Isolierstoffdurchführungen eintreten.
d) Die Erfindungsidee läßt sich nach einem anderen Unteranspruch noch weiter nutzen, wenn man die an sich vom Stand der Technik her bekannten quader- oder würfelförmigen Schotträume bei der Schaltanlagengrundausführung zu einem einteiligen Gehäuse zusammenfaßt, wodurch sich ohne Mühe eine "Verschachtelung" der Schotträume und somit eine weitere Reduzierung des umbauten Volumens der Schaltanlage erreichen läßt. Außerdem ergeben sich nur wenige Dichtstellen und somit eine geringere Leckrate.
e) Nach einem weiteren Unteranspruch ist eine andere vorteilhafte Weiterbildung der Erfindungsidee durch die Verwendung getrennter Gehäuse für den Sammelschienen- und den Schalterraum angegeben, bei dem im Falle einer Störung im Schalterraum dieser als ganzes abgebaut werden kann, ohne daß der Betrieb in einer der Sammelschienensysteme unterbrochen werden müßte.

Zum besseren Verständnis der Erfindung sollen die folgenden Zeichnungen dienen, die im einzelnen darstellen:
- Fig. 1A, 1B:: Schematische Darstellung der Leitungsführung im Sammelschienen- und Schalterraum in einer bekannten Schaltanlage in Seitenansicht und Draufsicht. (Stand der Technik).
- Fig. 2A, 2B, 2C:: Schematische Darstellung der Leitungsführung in der Grundausführung der erfindungsgemäßen Schaltanlage in Seitenansicht und Draufsicht, sowie im Schnitt A-B (Fig.2 C).
- Fig. 3A, 3B:: Schematische Darstellung der Leitungsführung im Schalterraum und im darüber im getrennten Gehäuse angeordneten Sammelschienenraum bei der erfindungsgemäßen Schaltanlage in Seitenansicht und Frontansicht.
- Fig. 4 :: Schnitt durch eine Einfachsammelschienenanlage.
- Fig. 5 :: Unterer Anschlußbereich zu Figur 4. (Schnitt X-Y).
- Fig. 6 :: Schnitt durch eine Doppelsammelschienenanlage.
- Fig. 7A :: Ausschnitt aus einem Sammelschienenraum mit einem Dreistellungsschalter in Draufsicht.
- Fig. 7B :: Schnitt K - L nach Fig. 7A
- Fig. 8 :: Ausschnitt aus einem Sammelschienenraum mit der Antriebsanordnung der Dreistellungsschalter von der Schottung aus gesehen.
- Fig. 9 :: Ausschnitt aus einem Sammelschienenraum mit der Antriebsanordnung der Dreistellungsschalter in Draufsicht.
- Fig.10A, 10B:: Schnitt durch eine Einfachsammelschienenanlage bei oben liegendem Kabelanschluß in 2 verschiedenen Ausführungen.
- Fig.11 :: Schnitt durch eine Doppelsammelschienenanlage bei oben liegendem Kabelanschluß.
- Fig.12A, 12B :: Schematische Darstellung der Grundausführung bei getrennten Gehäusen für die Schotträume.
- Fig. 13 :: Schnitt durch die erfindungsgemäße Schaltanlage mit Dreifachsammelschiene.

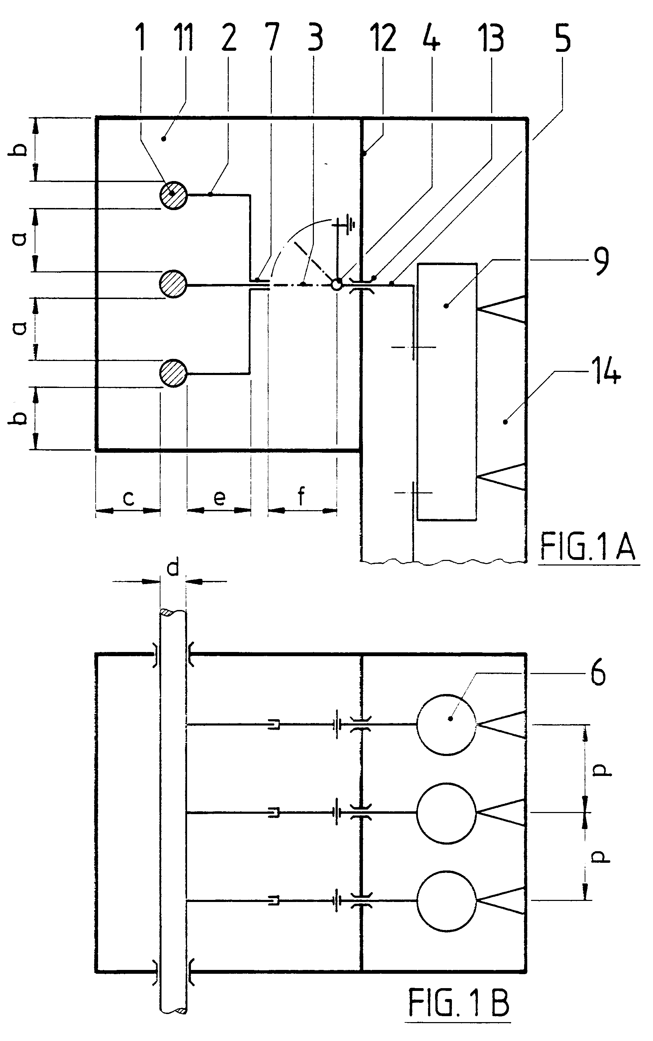

In den Figuren 1A und 1B hat der Sammelschienenraum 11 der bekannten Schaltanlage Quaderform mit übereinanderliegenden Sammelschienen 1, Zuleitungen 2 zu den Dreistellungsschaltern 3, deren Drehachsen 4 phasenweisen an den in der Schottung 12 gasdicht eingebauten Durchführungen 13 angebracht sind. Die Verbindungsleitungen 5 verbinden die Durchführungen 13 mit jeweils einem Pol 6 des im Schalterraum 14 befindlichen Leistungsschalters 9. Die Höhe des Sammelschienenraumes 11 ist vom Durchmesser d der Sammelschienen 1 und den Abständen a und b bestimmt, während seine Tiefe von dem Abstand c, dem Sammelschienendurchmesser d, der Tiefe e der gekröpften, die mittlere Sammelschiene kreuzenden Zuleitung 2 und der Länge f des Schaltgliedes des Dreistellungsschalters 3 abhängt. Die Phasen des Dreistellungsschalters haben miteinander fluchtende Drehachsen 4, ihre zueinander parallelen Schwenkebenen sind voneinander in demselben Abstand p wie die Polmitten des Leistungsschalters 9 entfernt. Auf Grund der Länge und Form der Zuleitungen 2 müssen die Gegenkontakte 7 auf Isolatoren (nicht dargestellt) befestigt werden.

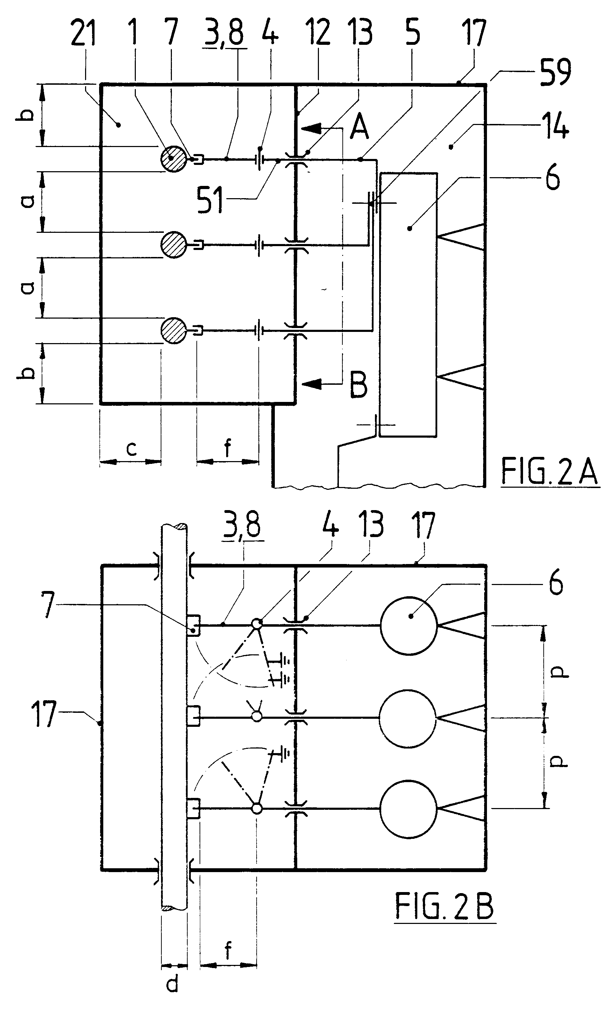

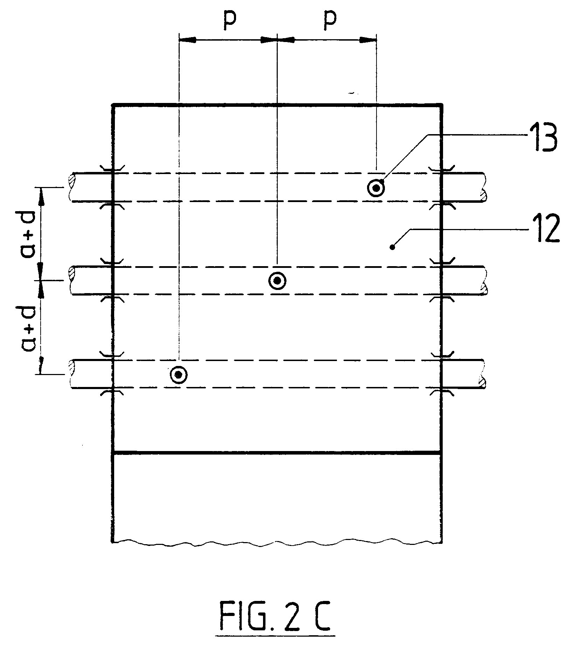

In den Figuren 2A und 2B ist für die erfindungsgemäße Schaltanlage zu erkennen, daß die Höhe des Sammelschienenraums 21 von denselben Größen bestimmt wird, wie bei der bekannten Schaltanlage nach Figur 1A, 1B. Die Leitungsführung von den Sammelschienen 1 zu den Durchführungen 13 erfolgt jedoch über die Dreistellungsschalter 3 geradlinig in den einzelnen Phasen, in zueinander parallelen Ebenen, so daß in der Tiefe nur die Maße c, d und f bestimmend sind. Außerdem erkennt man in Figur 2B, daß die Durchführungen 13 phasenweise mit den Polen 6 des Leistungsschalters fluchten und somit die Schottung 12 diagonal gestaffelt durchdringen. (Fig.2c). Dadurch wird in jeder Phase die kürzest mögliche Leitungsführung zwischen der Sammelschiene 1 und dem Leistungsschalterpol 6 über den Dreistellungsschalter 3, den Durchführungsstrombolzen 51 und die Verbindungsleitung 5 erreicht, wobei der Gegenkontakt 7 für das bewegliche Schaltglied 8 des Dreistellungsschalters 3 direkt an der Sammelschiene 1 ohne zusätzlichen Stützpunkt durch einen Isolator angebracht ist. Die erfindungsgemäße geradlinige Leitungsführung vermeidet auch weitgehend im Kurzschlußfalle die Ausbildung von elektrodynamischen Kräften auf die Leitungsabschnitte. Die Drehachsen 4 schneiden jeweils unter einem rechten Winkel die durch die Sammelschiene 1 und den Dreistellungsschalter 3 bestimmte Ebene, in der somit auch die Schwenkbewegung des Dreistellungsschalters 3 beim Ausschalten und Erden abläuft. Die Breite des Sammelschienenraumes 21 kann dadurch minimiert werden, daß gemäß Figur 2B die Dreistellungsschalter 3 der beiden Außenphasen in entgegengesetzter Richtung, nach dem Inneren der Schaltanlage verschwenkt werden, die Schwenkrichtung der Mittelphase kann dabei frei gewählt werden.

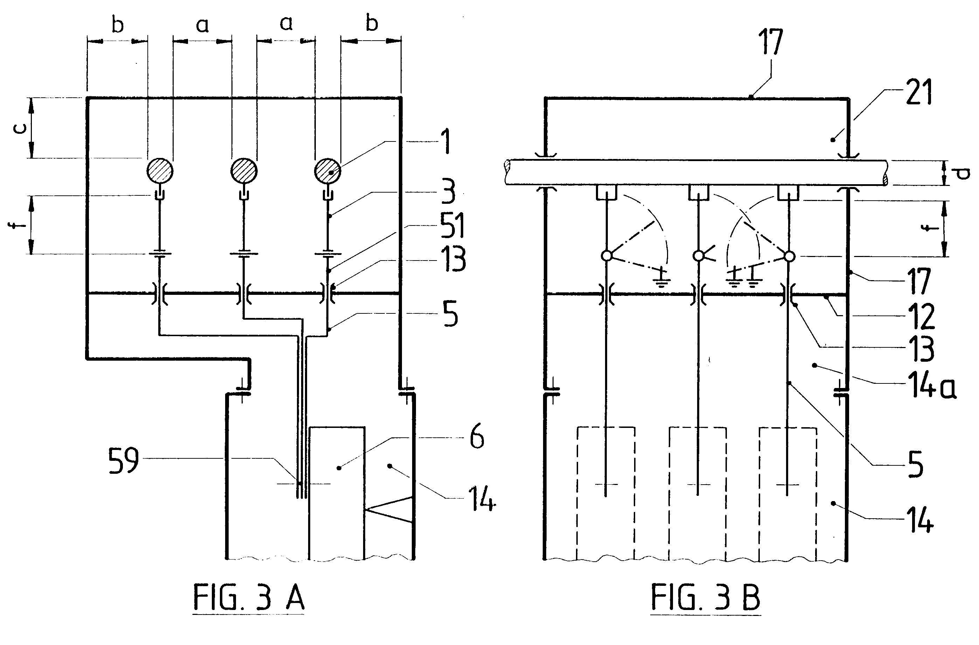

Die vorgeschlagene Leitungsführung im Sammelschienenraum 21 kann auch bei einer Schaltanlage angewendet werden, bei der dieser Raum nach Figur 3A und 3B oberhalb des Schalterraumes 14 und gegen diesen um 90 ° verdreht angebracht ist. Die Verbindungsleitungen 5 zwischen den Durchführungsstrombolzen 51 und den Schalterpolen 6 verlaufen im Schalterraum 14 und dem zugehörigen Teilvolumen 14a unterschiedlich gekröpft, aber auch jeweils in zueinander parellelen Ebenen (Fig. 3B). Dadurch bleibt auch die Diagonalanordnung der drei Durchführungen 13 in der Schottwand 12 wie in Figur 2C erhalten.

In den bisherigen Darstellungen können statt der Dreistellungsschalter überall auch Trennschalter und getrennte Geräte zur Betriebserdung der Abzweige Anwendung finden.

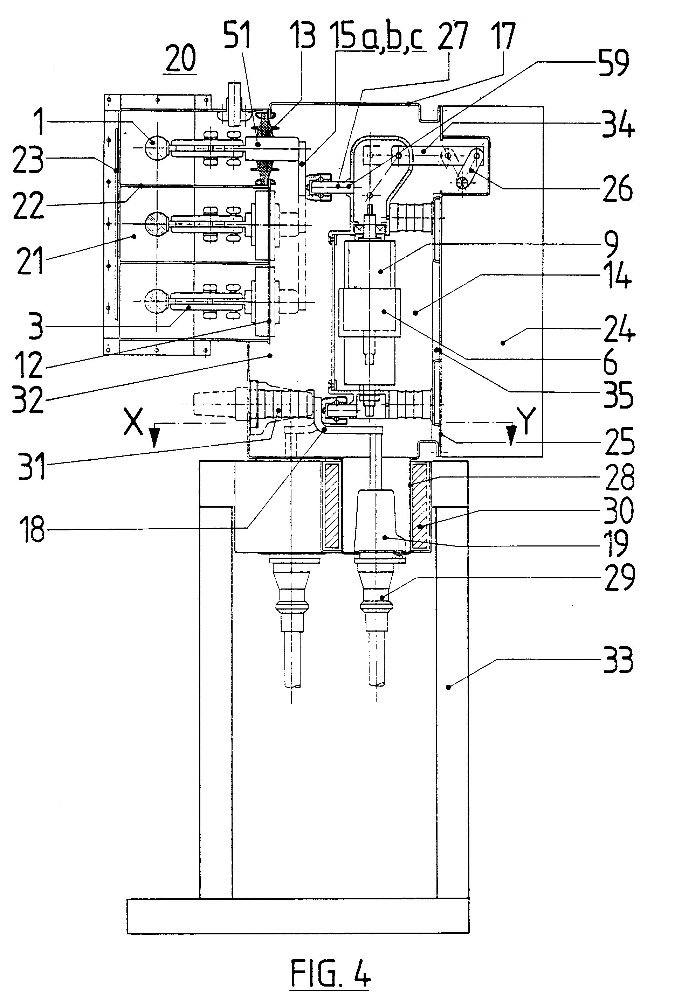

Der konstruktive Aufbau einer Einfachsammelschienenanlage nach dem Leitungsführungsschema der Figuren 2A, 2B und 2C ist aus Figur 4 zu ersehen. Das Gehäuse 20 enthält den quaderförmigen Sammelschienenraum 21 und den Schalterraum 14 und ist in einem Stück angefertigt. Die Schottung 12 trägt diagonal versetzt die Durchführungen 13, an denen drehbar gelagert die Dreistellungsschalter 3 angebracht sind. Die Sammelschienen 1 sind geradlinig übereinander angeordnet und in nicht dargestellten Durchführungen gelagert. Ein gasdicht angebrachter Deckel 23 verschließt die Montageöffnung des Sammelschienenraumes 21.

Der Leistungsschalter 6 besteht aus drei Polen 6 und dem Antrieb 24, dessen Grundrahmen 25 die Montageöffnung des Schalterraumes 14 gasdicht verschließt. Der Antrieb 24 enthält außerhalb des Gasraumes einen Energiespeicher für die Ein- und Ausschaltung, sowie die üblichen Steuer- und Meldeorgane. Die Übertragung der Antriebsbewegung erfolgt über gasdicht gelagerte Kurbeln 26 und eine Isolierschaltstange 34 auf die beweglichen Schaltkontakte der Pole 6. Damit der Leistungsschalter 9 mit seinen beweglichen Teilen leicht gewartet werden kann, ohne daß das Gehäuse 20 weitere Montageöffnungen benötigt, findet die elektrische Verbindung an den oberen und unteren Anschlußstellen 59 über einfache Steckkontakte 27 statt.

Die Steckkontakte 27 befinden sich an den beiden Bereichen der Anschlußstellen für alle drei Pole 6 vorzugsweise auf gleicher Höhe. Die Verbindungsleitungen 15a, b c zu den Durchführungsstrombolzen 51 haben daher unterschiedliche Längen und sind phasenweise in jeweils derselben Ebene wie die Leistungsschalterpole 6. Der Abstand zwischen den spannungsführenden Phasen ist nirgendwo durch Kröpfungen oder Leiterkreuzungen vermindert. Da die Durchführungsstrombolzen 51 und die Pole 6 des Leistungsschalters 9 als Stützpunkte sehr stabil sind, kann weitgehend auf zusätzliche Abstützungen der Verbindungsleitungen durch besondere Isolatoren und dergleichen verzichtet werden.

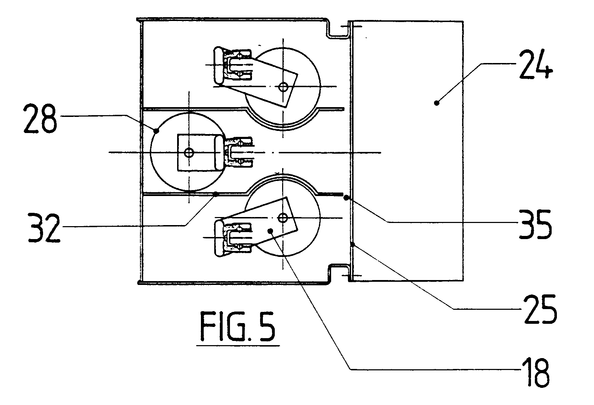

In Figur 5 erkennt man, daß im unteren Anschlußbereich das Gehäuse 20 in einphasig gekapselte, zylindrische Anschlußräume 28 übergeht, in denen je ein Kabel über Hochspannungsstecker 29 anschließbar ist. Die Anschlußräume 28 sind im Dreieck angeordnet und können an ihrer Außenseite, wie aus älteren Konstruktionen bekannt, mit den Sekundärwicklungen von Stromwandlern 30 ausgerüstet sein. Außerdem können im unteren Bereich des Gehäuses 20 weitere Steckbuchsen 31 für den Anschluß von Spannungswandlern, oder zur Anbringung von Arbeitserdern und dergleichen vorgesehen werden. Die Kabelanschlüsse 19 sind phasenweise durch kurze Leitungen 18 mit den unteren Steckkontakten 27 verbunden.

Geerdete Trennwände 22 bzw. 32 unterteilen nach einem weiteren Erfindungsmerkmal gemäß Figur 4 und 5 sowohl den Sammelschienenraum 21 als auch den Schalterraum 14 in der ganzen Höhe und Tiefe in jeweils drei einphasige, gegeneinander nicht gasdichte Räume. Die Trennwände 22 und 32 stoßen, gegeneinander einen rechten Winkel bildend, an beide Seiten der Schottung 12 und sind mit dieser fest, z.B. durch Schweißung verbunden. Die Schottung 12 wird dadurch optimal versteift, was sich vorallem im Falle einer Lichtbogenstörung in einem der Räume 21 oder 14 vorteilhaft auswirkt, da die mit Dichtungen eingesetzten Durchführungen 13 nicht durch Verbiegungen der Schottung 12 leck werden können. Auf diese Weise bleibt der nicht betroffene Schottraum, z.B. der Sammelschienenraum 21 uneingeschränkt betriebsfähig. Nach einem weiteren Merkmal der Erfindung sind zum Beispiel gegenüber dem Deckel 23 und dem Grundrahmen 25 des Antriebs 24 in den Trennwänden 22 und 32 vorwiegend spaltförmige Verbindungsöffnungen 35 vorgesehen. Im Falle einer Druckentwicklung infolge eines inneren Lichtbogens wird durch sie ein Druckausgleich innerhalb des Schottraumes 14 oder 21 ermöglicht und somit eine partielle Überlastung eines Teilraumes verhindert. Die Trennwände 22 und 32 sind außerdem mit den benachbarten fest angebauten Abdeckungen 17 verbunden und versteifen so auch diese.

Eine Schaltanlage nach Figur 4 ruht auf einem Gestell 33, dessen Höhe von der Zugänglichkeit der Hochspannungsstecker 29 bei der Montage abhängt.

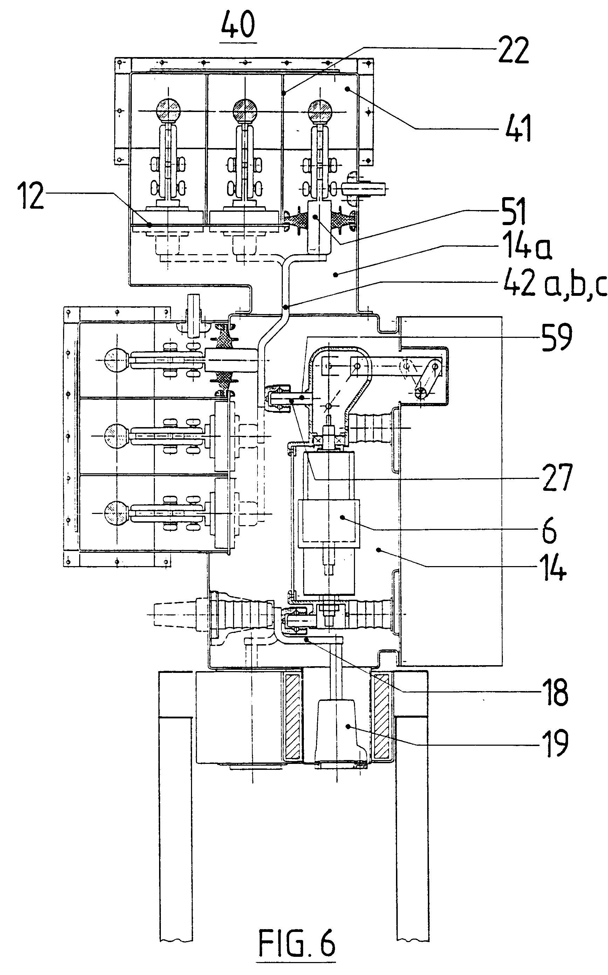

In Figur 6 ist, aufbauend auf einer Einfachsammelschienenanlage nach Figur 4, eine Doppelsammelschienenanlage gezeigt. Der zweite Sammelschienenraum 41 hat dabei eine Leitungsführung nach Figur 3 und ist in einem Gehäuse 40 untergebracht, in dem sich auch ein Teil 14a des vergrößerten Schalterraums mit den Verbindungsleitungen 42a, b, c von den Durchführungsstrombolzen 51 zu den Steckkontakten 27 an der Oberseite der Pole 6 des Leistungsschalters 9 befindet.

Aus den Figuren 4 und 6 und der zugehörigen Beschreibung geht hervor, daß der innere Aufbau der beiden Sammelschienenräume 21 und 41 völlig identisch ist. Das gilt auch für den Aufbau und den Antrieb der Dreistellungsschalter, die im folgenden beschrieben werden.

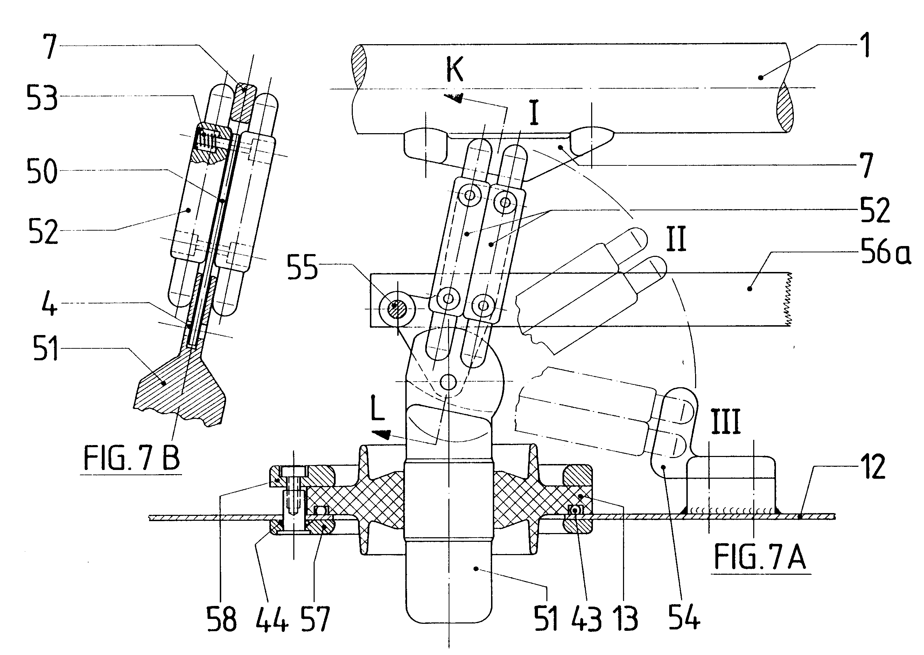

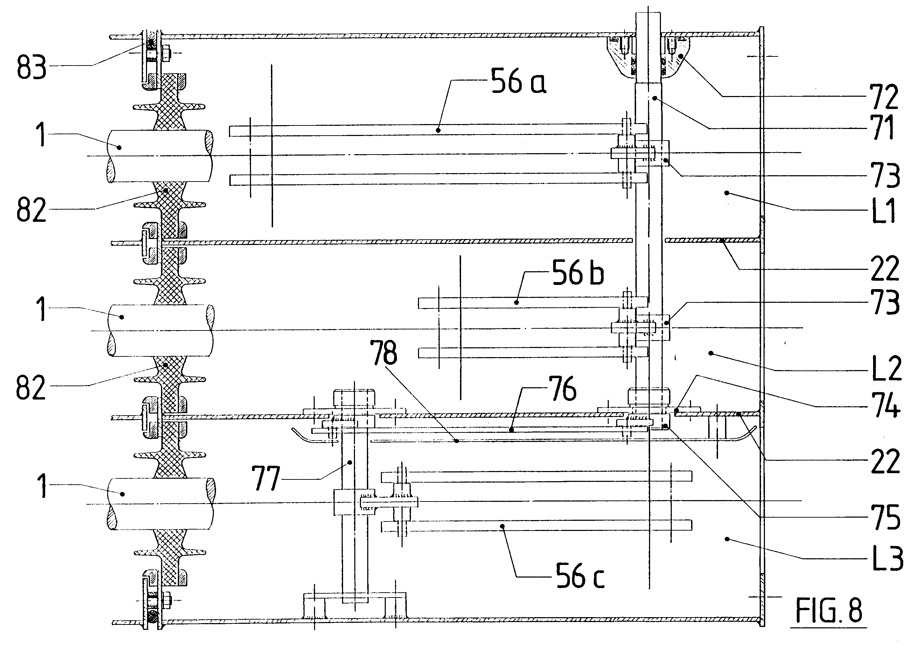

Ein Dreistellungsschalter besteht nach den Figuren 7A und 7B aus einem aus Blech hergestellten Träger 50, dessen Drehachse 4 in einer Gabel des Durchführungsstrombolzens 51 gelagert ist. An dem Träger 50 sind symmetrisch stromführende Kontaktbrücken 52, im vorliegenden Fall je zwei auf jeder Seite, über Kontaktfedern 53 so angebracht, daß sie im eingeschalteten Zustand den Bolzen 51 mit dem an der Sammelschiene 1 befestigten Einschlagkontakt 7 verbinden. An dem Träger 50 ist ein Auge 55 vorgesehen, an dem für jeden Schalter eine Antriebsstange 56 angreift. Das Auge 55 ist so angeordnet, daß der Schalter, z.B. von der linken Außenphase nach Figur 8 über die Antriebsstange 56a aus der in Figur 7A dargestellten Betriebsstellung I in die Trennstellung II und in die Erdungsstellung III bewegt werden kann.

In der Erdungsstellung III kontaktieren die Kontaktbrücken 52 den Erdungskontakt 54, der mit der geerdeten Schottung 12 z.B. durch Schweißung leitend in Verbindung steht.

Die Figur 7A stellt außerdem den gasdichten Einbau der Durchführung 13 in die Schottung 12 dar. Demzufolge wird die Durchführung 13 mit dem bereits angebauten Dreistellungsschalter durch die Montageöffnung des Sammelschienenraums 21 oder 41 (Fig. 4 oder Fig. 6) eingeschoben und gegen die Schottung 12 über die Klemmringe 57 und 58 mit Schrauben verspannt. Die Abdichtung erfolgt dabei durch die Dichtringe 43 und 44.

Im hier gewählten Beispiel öffnen nach Figur 8 die Dreistellungsschalter der Phasen L1 und L2 im Uhrzeigersinn und der Schalter in Phase L3 im Gegenuhrzeigersinn (siehe Figuren 2B und 3B). Außerdem weicht die Richtung der eingeschalteten Kontaktbrücken 52 aus kinematischen Gründen vom gestreckten, geradlinigen Verlauf, wie im vorangegangenen Text zu Fig. 2A und 2B ausgeführt, geringfügig ab, was jedoch die Vorteile der erfindungsgemäßen Idee nicht schmälert.

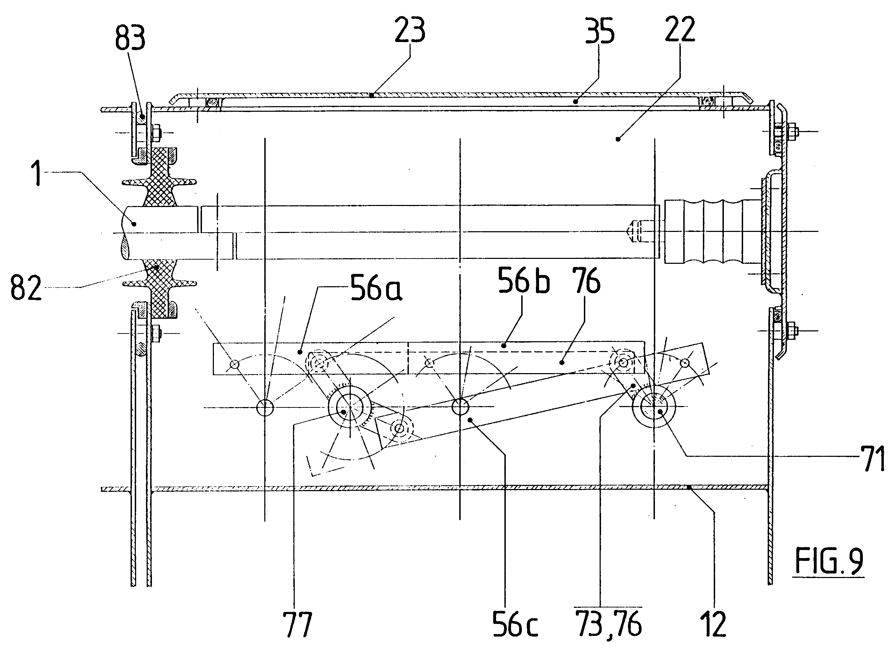

In Figur 8 und Figur 9 wird der Antrieb für die drei Dreistellungsschalter eines Sammelschienenraumes 21 oder 41 dargestellt. Die Antriebswelle 71 tritt, wie bereits in Figur 4 angegeben, von einem Antrieb außerhalb der Schaltanlagenkapselung kommend, über eine mit Dichtungsmitteln versehene Lagerstelle 72 in den Sammelschienenraum 21 oder 41 ein und durchdringt mit einem engen Spalt die Trennwände 22 zwischen den Sammelschienen 1 der Phasen L₁ und L₂ bzw. L₂ und L₃, deren Lage beispielsweise auch in Figur 4 bezeichnet ist. Für die Übertragung der Schaltbewegung zu den Phasen L₁ und L₂ ist je eine Kurbel 73 an der Antriebswelle 71 vorgesehen, von der Antriebsstangen 56a und 56b die Verbindung zu den jeweiligen Dreistellungsschaltern herstellen. Die Antriebswelle 71 ist in der Trennwand 22 zwischen L₂ und L₃ in einem Lager 74 geführt, und durch eine Kurbel 75 abgeschlossen, die über das Gestänge 76 eine zweite Welle 77 und von dieser ausgehend über eine gekreuzt angeordnete Antriebsstange 56c den zu Phase L3 gehörenden, im Gegendrehsinn zu schaltenden Dreistellungsschalter bewegt. Das Gestänge ist durch die Abschirmung 78 gegen die spannungsführenden Teile abgedeckt.

In der Figur 9 ist auch die Montageöffnung des Sammelschienenraums 21 mit dem Deckel 23 und der Verbindungsöffnung 35 zwischen den durch die Trennwände 22 bestimmten Teilräumen zu erkennen. Außerdem sind in Figur 9 die Schottung 12, die Sammelschienen 1 mit ihren Durchführungen 82 und der gasdichten Verschraubung 83 zwischen zwei aneinandergereihten Schaltanlagen zu sehen. Man erkennt in dieser Figur auch, wie die Sammelschienenbefestigung in einem Endfeld gelöst ist. Diese Einzelheiten sind jedoch für die vorliegende Erfindung nicht von Bedeutung und werden daher nicht näher beschrieben.

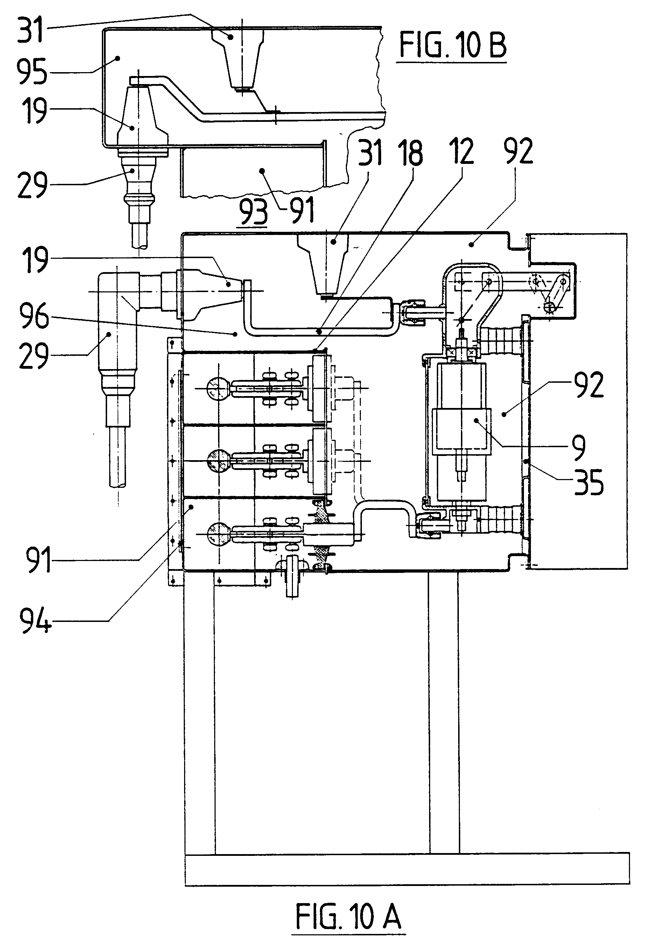

Figur 10A zeigt die erfindungsgemäße Schaltanlage mit einem oberhalb des Sammelschienenraums angeordneten Anschlußbereich, wie sie in Stationsgebäuden ohne Kabelkanäle eingesetzt werden. Der Sammelschienenraum 91 und der Schalterraum 92 weisen dabei dieselben wesentlichen Merkmale auf, wie in der Figur 4. Der Schalterraum 92 ist so gegliedert, daß der Kabelanschluß 19 mit mindestens einem Hochspannungsstecker 29 pro Phase hinter dem Leistungsschalter 9 und oberhalb dem Sammelschienenraum 91 vorgesehen ist. Das Gehäuse 93 kann dabei mit bündiger Rückwand 94, wie in Fig. 10A dargestellt, oder nach Figur 10B mit einem den Sammelschienenraum 91 überragenden Teil 95 bei von unten einsteckbaren Steckern 29 ausgeführt sein. Im oberen Teil des Schalterraums 92 sind Steckbuchsen 31 zum Anschluß von Spannungswandlern und dergleichen vorgesehen. Die Trennwände 96 im Schalterraum 92 umgreifen in dieser Ausführung der Schaltanlage die Schottung 12 an zwei Seiten.

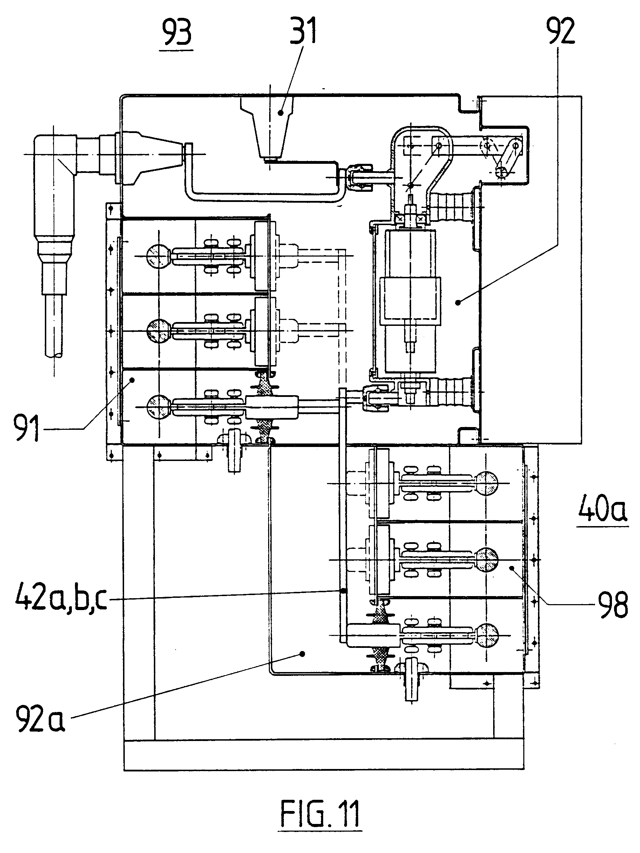

Schaltanlagen mit oben liegendem Kabelanschluß können auch vorteilhaft als Doppelsammelschienenanlagen weitergebildet werden. Als mögliches Ausführungsbeispiel ist dabei eine Anordnung nach Figur 11 dargestellt, bei dem die wesentlichen Merkmale der Erfindung sowohl im Schalterraum 92 als auch in den beiden Sammelschienenräumen 91 und 98 Anwendung finden. Es gelten dabei dieselben Bezugszeichen wie in Figur 10.

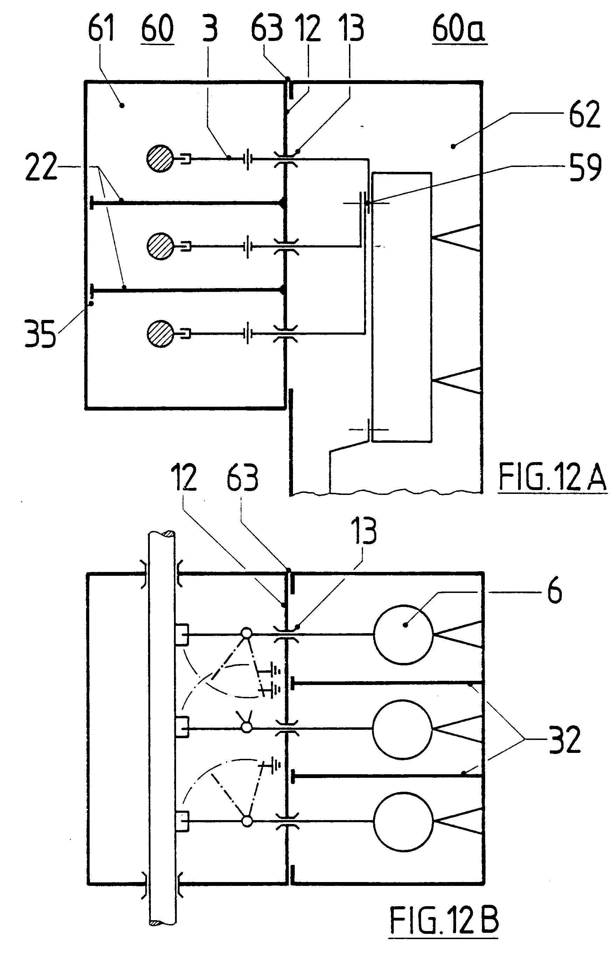

Die Grundausführung der erfindungsgemäßen Schaltanlage kann nach Figur 12A und 12B auch mit einem zweiteiligen Gehäuse 60 und 60a ausgeführt werden. Im Gehäuse 60 ist dabei der Sammelschienenraum 61 untergebracht. Dieser Raum ist durch die Schottung 12 mit den Durchführungen 13 begrenzt. Der Schalterraum 62 ist in das Gehäuse 60a eingebaut, das gegenüber der Schottung 12 offen ist. Die beiden Gehäuse 60 und 60a sind über eine nur angedeutete Befestigungsvorrichtung 63 miteinander gasdicht, aber lösbar verbunden. Diese Ausführung hat den Vorteil, daß bei einer Störung in irgendeinem Teil des Schalterraums 62 dieser nach dem Ablassen des Isoliergases gänzlich abgebaut und gegen einen neuwertigen ausgetauscht werden kann. Die Energiezufuhr für den Rest der Schaltanlage braucht dabei nicht unterbrochen zu werden, da der Sammelschienenraum 61 bei geerdeten Dreistellungsschaltern 3 betriebsbereit bleibt.

In den Figuren 12A und 12B sind auch die Trennwände 22 und 32 schematisch angedeutet. Gemäß dem Konzept dieser Anlagenausführung sind die beiden Trennwände 22 mit der Schottung fest verbunden, z.B. verschweißt, während die Trennwände 32 an der Schottung, jederzeit lösbar, anliegen.

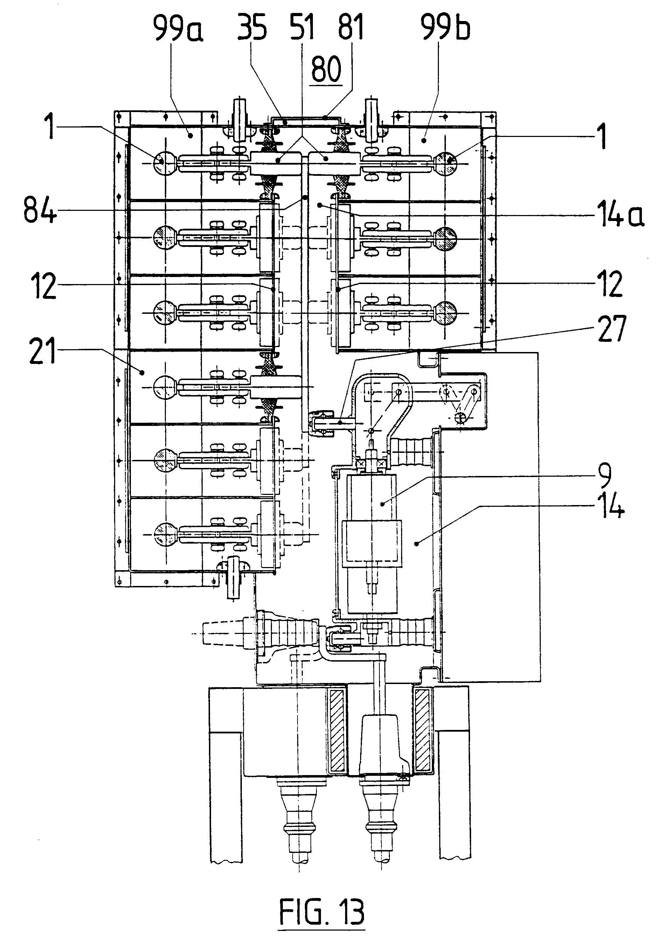

In Figur 13 ist eine Dreifachsammelschienenanlage dargestellt. Auf der Grundausführung nach Figur 4 oder nach Figur 12A, 12B sind zwei symmetrisch angeordnete im Gehäuse 80 untergebrachte Sammelschienenräume 99a und 99b aufgebaut. Jeder der Sammelschienenräume entspricht in allen Einzelheiten der Ausführung nach 21 in Figur 4 bzw. nach 41 in Figur 6. Im Mittelteil des Gehäuses 80 befindet sich ein Teilvolumen 14a des Schalterraums 14 mit den Verbindungsleitungen 84, die den Anschluß der Durchführungsstrombolzen 51 an die Steckkontakte 27 des Leistungs- oder Lastschalters 9 herstellen. Ein Deckel 81 verschließt die Montageöffnung des Mittelteils gasdicht im Betrieb. Das Gehäuse 80 ist mit dem Gehäuse 20 bzw. dem zweiteiligen Gehäuse 60/60a der Grundausführung ebenfalls gasdicht verbunden.

## Patentansprüche

1. Metallgekapselte, mit Druckgas gefüllte, mehrphasige Hochspannungsschaltanlage für Einfach- oder Mehrfachsammelschienensysteme mit Durchführungen (13) aufweisenden Schottungen (12) zur gasdichten Unterteilung in folgende Schotträume (14,21,41,61,62,91,92,98,99):
- einen Schalterraum (14,62,92), der einen Leistungs- oder Lastschalter (9) und mit diesem elektrisch verbundene, die Kapselung durchdringende Kabelanschlüsse (19) enthält, und
- einen Sammelschienenraum (21,41,61,91,98,99a und b) für jedes System, der die Sammelschienen (1) und mit diesen verbunden einen Trenn- bzw. Dreistellungsschalter (3) für jede Phase enthält,
- sowie die beiden Schotträume (14,21,41,61,62,91,92,98,99) elektrisch verbindende Durchführungsstrombolzen (51),
wobei die Pole (6) des Leistungs- oder Lastschalters (9) bezogen auf die Schaltanlagenfrontseite nebeneinander geradlinig oder geringfügig versetzt angeordnet sind,
**gekennzeichnet** durch folgende Merkmale:
a) in jedem Sammelschienenraum (21, 41, 61, 91, 98, 99a und b) erfolgt die elektrische Verbindung zwischen den Sammelschienen (1) und dem Durchführungsbolzen (51) einer jeden Phase geradlinig und wenigstens annähernd rechtwinklig zur Sammelschienenachse in zueinander parallelen Ebenen,
b) die Durchführungen (13) sind in der Schottwand (12) diagonal so gestaffelt, daß die Mittellinien ihrer Durchführungsstrombolzen (51) in der einen Richtung einen Abstand gleich dem Sammelschienenmittenabstand (a + d) und in der anderen Richtung einen solchen gleich dem Mittenabstand (p) der Pole (6) des Leistungs- oder Lastschalters (9) aufweisen,
c) im Schalterraum (14, 62, 92) erfolgt die elektrische Verbindung zwischen den oberen oder unteren Anschlußstellen (59) des Leistungs- oder Lastschalters (9) und den Durchführungstrombolzen (51) geradlinig oder abgewinkelt in phasenweise zueinander parallelen Ebenen.

2. Metallgekapselte, mit Druckgas gefüllte, mehrphasige Hochspannungsschaltanlage nach Anspruch 1,
**dadurch gekennzeichnet,**
daß die Schotträume (14, 21, 41, 61, 62, 91, 92, 98, 99) der Schaltanlage vorzugsweise würfel- oder quaderförmig mit ebenen Abdeckungen (17) ausgebildet und durch jeweils eine aus einem geerdeten Teil hergestellten Schottung (12) voneinander abgetrennt sind, daß jeder Schottraum (14, 21, 41, 61, 62, 91, 92, 98, 99) mindestens eine im Betrieb gasdicht verschlossene Montageöffnung aufweist und daß die Sammelschienen (1) eines jeden Systems in einer zur nächstliegenden Abdeckung (17) zumindestens annähernd parallelen Ebene angeordnet sind.

3. Metallgekapselte, mit Druckgas gefüllte, mehrphasige Hochspannungsschaltanlage nach den Ansprüchen 1 oder 2.
**dadurch gekennzeichnet,**
daß deren Grundausführung den Schalterraum (14, 62,92) und an dessen Rückseite den durch die Schottung (12) abgetrennten Sammelschienenraum (21, 61, 91) für ein Einfachsammelschienensystem enthält, wobei die Sammelschienen (1) in Höhe der oberen oder unteren Anschlußstellen (59) des Leistungs- oder Lastschalters (9) angeordnet und mit diesem verbunden sind, während von den jeweils anderen Anschlußstellen phasenweise Leitungen (18) zu den Kabelanschlüssen (19) der Schaltanlage geführt sind und daß gegebenenfalls in der Kapselung des Schalterraums (14) mehrere, vorzugsweise eine Öffnung durchsetzende Verbindungsleitungen (42a,b,c;84), zur gasdichten, elektrischen Verbindung mit einem oder mehreren in getrennten Gehäusen untergebrachten zusätzlichen Sammelschienensystemen zur Erweiterung der Schaltanlage vorhanden sind.

4. Metallgekapselte, mit Druckgas gefüllte, mehrphasige Hochspannungsschaltanlage nach Anspruch 3,
**gekennzeichnet durch**
ein gemeinsames Gehäuse (20, 93) für die Grundausführung, das vorzugswiese aus Blechteilen zusammengeschweißt ist.

5. Metallgekapselte, mit Druckgas gefüllte, mehrphasige Hochspannungsschaltanlage nach Anspruch 3,
**dadurch gekennzeichnet,**
daß der Sammelschienenraum (61) der Grundausführung in einem abgeschlossenen Gehäuse (60) untergebracht ist, das mit der Schottung (12) an dem getrennten Gehäuse (60a) des Schalterraums (62) anliegt und diesen im Betrieb mittels einer lösbaren Verbindung gasdicht abschließt.

6. Metallgekapselte, mit Druckgas gefüllte, mehrphasige Hochspannungsschaltanlage nach einem der Ansprüche 1 oder 2,
**dadurch gekennzeichnet,**
daß jedes der zur Erweiterung der Schaltanlage vorgesehenen Sammelschienensysteme jeweils in einem weiteren Gehäuse (40) untergebracht ist, das den durch die Schottung (12) abgetrennten Sammelschienenraum (41, 98) und ein betriebsmäßig zum Schalterraum (14,92) gehörendes Teilvolumen (14a, 92a) mit den Verbindungsleitungen (42a, b, c) zum Leistungs- oder Lastschalter (9) enthält.

7. Metallgekapselte, mit Druckgas gefüllte, mehrphasige Hochspannungsschaltanlage nach einem der Ansprüche 1 oder 2
**dadurch gekennzeichnet,**
daß zwei zur Erweiterung der Schaltanlage vorgesehene Sammelschienensysteme in einem gemeinsamen Gehäuse (80) untergebracht sind, das die beiden durch Schottungen (12) abgetrennten, symmetrisch aufgebauten Sammelschienenräume (99a, 99b) und zwischen diesen eine betriebsmäßig zum Schalterraum (14) gehörendes Teilvolumen (14a) enthält, in dem die Verbindungsleitungen (84) zum Schalterraum (14) angebracht sind.

8. Metallgekapselte, mit Druckgas gefüllte, mehrphasige Hochspannungsschaltanlage nach einem der Ansprüche 3, 4 oder 5,
**dadurch gekennzeichnet,**
daß der Schalterraum (14, 62, 92) in dem an den Sammelschienenraum (21, 61, 91) angrenzenden Bereich eine geringere Tiefe hat als in dem die Kabelanschlüsse (19) enthaltenden Bereich.

9. Metallgekapselte, mit Druckgas gefüllte, mehrphasige Hochspannungsschaltanlage nach den Ansprüchen 4 und 8,
**dadurch gekennzeichnet,**
daß die Schottung (12) des gemeinsamen Gehäuses (20,93) aus einem abgewinkelten Blechteil hergestellt ist.

10. Metallgekapselte, mit Druckgas gefüllte, mehrphasige Hochspannungsschaltanlage nach einem der Ansprüche 1 bis 5,
**dadurch gekennzeichnet,**
daß der Leistungs- oder Lastschalter (9) mit seinem Antrieb (24) in die frontseitige Montageöffnung des Schalterraumes (14) so einbaubar ist, daß Steckkontakte (27) die Verbindung zu den Sammelschienen (1) und den Kabelanschlüssen (19) herstellen und am Grundrahmen (25) des Antriebs (24) vorgesehene Dichtleisten den gasdichten Verschluß herstellen.

11. Metallgekapselte, mit Druckgas gefüllte, mehrphasige Hochspannungsschaltanlage nach einem der Ansprüche 1 bis 10,
**dadurch gekennzeichnet,**
daß geerdete Trennwände (22, 32, 96) die einzelnen Schotträume (14, 14a, 21, 41, 61, 62, 91, 92, 98, 99a und b) phasenweise unterteilen und dabei an Stellen geringer elektrischer Feldstärke Verbindungsöffnungen (35) zwischen den Teilräumen aufweisen, und daß die Trennwände (22, 32, 96) von beiden Seiten an der jeweiligen Schottung (12) diese versteifend anliegen oder mit ihr beispielsweise durch Verschweißung verbunden sind.

12. Metallgekapselte, mit Druckgas gefüllte, mehrphasige Hochspannungsschaltanlage nach Anspruch 1,
**dadurch gekennzeichnet,**
daß die Schwenkebenen der Trenn- bzw. Dreistellungsschalter (3) phasenweise mit den durch die Achsen der Sammelschienen (1), die Strombahnen der Trenn- und Dreistellungsschalter (3) und die Mittellinien der Durchführungsstrombolzen (51) gebildeten Ebenen zusammenfallen oder in geringem Abstand parallel dazu verlaufen.

13. Metallgekapselte, mit Druckgas gefüllte, mehrphasige Hochspannungsschaltanlage nach Anspruch 1 und 12,
**dadurch gekennzeichnet,**
daß die Trenn- bzw. Dreistellungsschalter (3) der Außenphasen in entgegengesetzter Schwenkrichtung bewegbar sind.

14. Metallgekapselte, mit Druckgas gefüllte, mehrphasige Hochspannungsschaltanlage nach Anspruch 13,
**dadurch gekennzeichnet,**
daß eine erste Welle (71) für den Antrieb von zwei benachbarten Trenn- bzw. Dreistellungschaltern (3) gasdicht von außen in den jeweiligen Sammelschienenraum (21, 41) eingeführt und zusätzlich in einer der Trennwände (22) gelagert ist und daß eine zweite Welle (77) in derselben Trennwand (22) gelagert ist und über ein Getriebe von der ersten Welle (71) mit umgekehrtem Drehsinn bewegt wird und dabei den dritten Schalter mit der entgegengesetzten Schwenkrichtung antreibt.

15. Metallgekapselte, mit Druckgas gefüllte, mehrphasige Hochspannungsschaltanlage nach Anspruch 14,
**dadurch gekennzeichnet,**
daß ein an einer der Trennwände (22) angebautes, mit einer Abschirmung (78) versehenes Viergelenkgetriebe die Bewegungsübertragung von der ersten auf die zweite Welle vornimmt.

16. Metallgekapselte, mit Druckgas gefüllte, mehrphasige Hochspanngsschaltanlage nach einem der Ansprüche 1 bis 7,
**dadurch gekennzeichnet,**
daß die Sammelschienen (1) in den Seitenwänden der Schaltanlage in Durchführungen (82) befestigt sind.

17. Metallgekapselte, mit Druckgas gefüllte, mehrphasige Hochspannungsschaltanlage nach einem der Ansprüche 3, 4, 5, 8 oder 10,
**dadurch gekennzeichnet,**
daß die Kabelanschlüsse (19) phasenweise im Dreieck bzw. bezogen auf die Anlagenfrontseite diagonal gestaffelt angeordnet sind.

18. Metallgekapselte, mit Druckgas gefüllte, mehrphasige Hochspannungsschaltanlage nach einem der Ansprüche 3, 4, 5, 8, 10 oder 17,
**dadurch gekennzeichnet,**
daß pro Phase zwei oder mehrere Kabelanschlüsse (19) vorgesehen sind.

19. Metallgekapselte, mit Druckgas gefüllte, mehrphasige Hochspannungsschaltanlage nach den Ansprüchen 1 bis 5,
**dadurch gekennzeichnet,**
daß im Schalterraum (14, 62, 92) phasenweise Anschlußstellen, z.B.Steckbuchsen (31) für Spannungswandler o. ä. vorgesehen sind.

20. Metallgekapselte, mit Druckgas gefüllte, mehrphasige Hochspannungsschaltanlage nach einem der Ansprüche 3, 4 oder 5 sowie 8, 10, 17 und 18,
**dadurch gekennzeichnet,**
daß die Kabelanschlüsse (19) in deren Grundausführung oberhalb des Sammelschienenraumes an der Rückseite der Schaltanlage mit vertikaler oder horizontaler Anschlußrichtung der Stecker (29) angeordnet sind.

21. Metallgekapselte, mit Druckgas gefüllte, mehrphasige Hochspannungsschaltanlage nach einem der Ansprüche 1, 17, 18 oder 20,
**dadurch gekennzeichnet,**
daß die Schaltanlage im Bereich der Kabelanschlüsse (19) einphasig gekapselt ist.

22. Metallgekapselte, mit Druckgas gefüllte, mehrphasige Hochspannungsschaltanlage nach Anspruch 21,
**dadurch gekennzeichnet,**
daß die einphasigen Kapselungen zylindrisch ausgeführt und als Träger der Sekundärwicklungen von Stromwandlern (30) ausgebildet sind.

23. Metallgekapselte, mit Druckgas gefüllte, mehrphasige Hochspannungsschaltanlage nach Anspruch 1 und 17, 18, 20 bis 22,
**dadurch gekennzeichnet,**
daß die Kabelanschlüsse (19) durch eine zusätzliche Schottwand vom Rest des Schalterraumes (14, 62, 92) gasdicht abgetrennt und durch eine eigene Montageöffnung zugängig sind.

24. Metallgekapselte, mit Druckgas gefüllte, mehrphasige Hochspannungsschaltanlage nach einem der Ansprüche 1, 3, oder 10,
**dadurch gekennzeichnet,**
daß als Leistungs- oder Lastschalter (9) Vakuumschalter vorgesehen sind.

25. Metallgekapselte, mit Druckgas gefüllte, mehrphasige Hochspannungsschaltanlage nach einem der Ansprüche 1, 3, oder 10,
**dadurch gekennzeichnet,**
daß als Löschmittel für die Leistungs- oder Lastschalter (9) ein Isoliergas wie SF6 vorgesehen ist.

## Claims

1. Metal-clad, pressurized gas-filled, multiphase high voltage switchgear for single or multiple busbar systems comprising partitions (12) with ducts (13) for the gas-tight division into the following partitioned chambers (14, 21, 41, 61, 62, 91, 92, 98, 99):
- a switch chamber (14, 62, 92) comprising a circuit breaker or load-breaking switch (9) and cable terminals (19) electrically connected therewith and penetrating the cladding, and
- a busbar chamber (21, 41, 61, 91, 98, 99a and b) for each system, comprising the busbars (1) and a disconnecting or three-position switch (3) connected with the busbars for each phase,
- and duct current bolts (51) electrically connecting the two partitioned chambers (14, 21, 41, 61, 62, 91, 92, 98, 99), the poles (6) of the circuit breaker or load-breaking switch (9) being arranged linearly adjacent one another or slightly offset in relation to the switchgear front side,
characterised by the following features:
a) in each busbar chamber (21, 41, 61, 91, 98, 99a and b), the electrical connection between the busbars (1) and the duct bolt (51) of each phase is effected linearly and at least approximately at right angles to the busbar axis in planes parallel to one another,
b) the ducts (13) are diagonally staggered in the partition wall (12) in such a manner that the centre lines of their duct current bolts (51) are spaced part in one direction at a distance equal to the busbar centre-to-centre distance (a + d) and in the other direction at a distance equal to the centre-to-centre distance (p) of the poles (6) of the circuit breaker or load-breaking switch (9),
c) in the switch chamber (14, 62, 92), the electrical connection between the upper and lower connection points (59) of the circuit breaker or load-breaking switch (9) and the duct current bolts (51) is effected linearly or angularly in planes parallel to one another in phases.

2. Metal-clad, compressed gas-filled, multiphase high voltage switchgear according to claim 1, characterised in that the partitioned chambers (14, 21, 41, 61, 62, 91, 92, 98, 99) of the switchgear are preferably dice-shaped or cuboid with flat covers (17) and are separated from one another in each case by a partition (12) manfuctured from an earthed part, each partitioned chamber (14, 21, 41, 61, 62, 91, 92, 98, 99) comprises at least one assembly opening, which is sealed in a gas-tight manner during operation, and the busbars (1) of each system are arranged in plane at least approximately parallel to the nearest cover (17).

3. Metal-clad, compressed gas-filled, multiphase high voltage switchgear according to claims 1 or 2, characterised in that its basic design comprises the switch chamber (14, 62, 92) and on the rear side thereof the busbar chamber (21, 61, 91) separated by the partition (12) for a single busbar system, the busbars (1) being arranged at the height of the upper or lower connection points (59) of the circuit breaker or load-breaking switch (9) and being connected with said switch, whilst the lines (18) from the respective other connection points lead in phases to the cable terminals (19) of the switchgear, and optionally arranged in the cladding of the switch chamber (14) is a plurality of connecting lines (42a, b, c; 48), preferably penetrating an opening, for a gas-tight electrical connection with one or more additional busbar systems accommodated in separate housings for the extension of the switchgear.

4. Metal-clad, compressed gas-filled, multiphase high voltage switchgear according to claim 3, characterised by a common housing (20, 93) for the basic design, which is preferably welded together from sheet metal parts.

5. Metal-clad, compressed gas-filled, multiphase high voltage switchgear according to claim 3, characterised in that the busbar chamber (61) of the basic design is accommodated in a sealed housing (60), which rests with the partition (12) against the separate housing (60a) of the switch chamber (62) and seals the latter in a gas-tight manner during operation by means of a releasable connection.

6. Metal-clad, compressed gas-filled, multiphase high voltage switchgear according to one of claims 1 or 2, characterised in that each of the busbar systems provided for extending the switchgear is accommodated in a further housing (40), which contains the busbar chamber (41, 98) separated by the partition (12) and a partial volume (14a, 92a) operationally belonging to the switch chamber (14, 92) with the connecting lines (42a, b, c) to the circuit breaker or load-braking switch (9).

7. Metal-clad, compressed gas-filled, multiphase high voltage switchgear according to one of claims 1 or 2, characterised in that two busbar systems provided for extending the switchgear are accommodated in a common housing (80), which contains the two symmetrically designed busbar chambers (99a, 99b) separated by the partition (12) and between said chambers a partial volume (14a) operationally belonging to the switch chamber (14), in which the connecting lines (84) to the switch chamber (14) are arranged.

8. Metal-clad, compressed gas-filled, multiphase high voltage switchgear according to one of claims 3, 4 or 5, characterised in that, in the region adjoining the busbar chamber (21, 61, 91), the switch chamber (14, 62, 92) has a smaller depth than in the region containing the cable terminals (19).

9. Metal-clad, compressed gas-filled, multiphase high voltage switchgear According to claims 4 and 8, characterised in that the partition (12) of the common housing (20, 93) is manufactured from an angled sheet metal part.

10. Metal-clad, compressed gas-filled, multiphase high voltage switchgear according to one of claims 1 to 5, characterised in that the circuit breaker or load-breaking switch (9) can be fitted with its drive (24) in the front-side assembly opening of the switch chamber (14) in such a manner that plug contacts (27) form the connection with the busbars (1) and cable terminals (19) and sealing strips provided on the base frame (25) of the drive (24) form the gas-tight seal.

11. Metal-clad, compressed gas-filled, multiphase high voltage switchgear according to one of claims 1 to 10, characterised in that earthed dividing walls (22, 32, 96) divide the individual partitioned chambers (14, 21, 41, 61, 62, 91, 92, 98, 99a and b) into phases and comprise connecting openings (35) between the partial chambers in areas of low electrical field stength, and the dividing walls (22, 32, 96) rest on both sides against the respective partition (12), thereby reinforcing said partition, and are connected therewith, for example, by welding.

12. Metal-clad, compressed gas-filled, multiphase high voltage switchgear according to claim 1, characterised in that the pivot plans of the disconnecting or three-position switches (3) coincide in phases with the planes formed by the axes of the busbars (1), the current paths of the disconnecting and three-position switches (3) and the centre lines of the duct current bolts (51) or extend parallel thereto and at a short distance therefrom.

13. Metal-clad, compressed gas-filled multiphase high voltage switchgear according to claims 1 and 12, characterised in that the disconnecting or three-position switches (3) of the outer phases are movable in opposite pivoting directions.

14. Metal-clad, compressed gas-filled, multiphase high voltage switchgear according to claim 13, characterised in that a first shaft (71) for driving of two adjacent disconnecting or three-position switches (3) is introduced from the outside in a gas-tight manner into the respective busbar chamber (21, 41) and is additionally mounted in one of the dividing walls (22), and a second shaft (77) is mounted in the same dividing wall (22) and displaced in the opposite direction of rotation by the first shaft (71) via gearing to drive the third switch in the opposite pivoting direction.

15. Metal-clad, compressed gas-filled, multiphase high voltage switchgear according to claim 14, characterised in that a four-bar linkage provided with a cover (78) and fitted onto one of the dividing walls (22) effects the movement transmission from the first to the second shaft.

16. Metal-clad, compressed gas-filled, multiphase high voltage switchgear according to one of claims 1 to 7, characterised in that the busbars (1) are secured in ducts (82) in the side walls of the switchgear.

17. Metal-clad, compressed gas-filled, multiphase high voltage switchgear according to one of claims 3, 4, 5, 8 or 10, characterised in that the cable terminals (19) are arranged in phases in a triangle or diagonally staggered in relation to the front side of the switchgear.

18. Metal-clad, compressed gas-filled, multiphase high voltage switchgear according to one of claims 3, 4, 5, 8, 10 or 17, characterised in that two or more cable terminals (19) are provided per phase.

19. Metal-clad, compressed gas-filled, multiphase high voltage switchgear according to claims 1 to 5, characterised in that connection points, e.g. plug bushings (31) are provided in phases in the switch chamber (14, 62, 92) far voltage transformers or the like.

20. Metal-clad, compressed gas-filled, multiphase high voltage switchgear according to one of claims 3, 4 or 5 and 8, 10, 17 and 18, characterised in that, in the basic design, the cable terminals (19) are arranged above the busbar chamber on the rear side of the switchgear with a vertical or horizontal connecting direction of the plugs (29).

21. Metal-clad, compressed gas-filled, multiphase high voltage switchgear according to one of claims 1, 17, 18 or 20, characterised in that the switchgear is single-phase clad in the region of the cable terminals (19).

22. Metal-clad, compressed gas-filled, multiphase high voltage switchgear according to claim 21, characterised in that the single-phase claddings are cylindrical and designed as supports for the secondary windings of current transformers (30).

23. Metal-clad, compressed gas-filled, multiphase high voltage switchgear according to claims 1 and 17, 18, 20 to 22, characterised in that the cable terminals (19) are separated in a gas-tight manner from the rest of the switch chamber (14, 62, 92) by an additional partition wall and are accessible through a separate assembly opening.

24. Metal-clad, compressed gas-filled, multiphase high voltage switchgear according to one of claims 1, 3 or 10, characterised in that vacuum switches are provided as circuit breakers or load-breaking switches (9).

25. Metal-clad, compressed gas-filled, multiphase high voltage switchgear according to one of claims 1, 3 or 10, characterised in that an insulating gas such as SF6 is provided as an extinguishing agent for the circuit breaker or load-breaking switches (9).

## Revendications

1. Installation de distribution polyphasée à haute tension, à blindage métallique, remplie de gaz comprimé pour système de barres omnibus simples ou multiples avec des cloisonnements étanches 12 présentant des passages (13) pour la compartimentation étanche aux gaz en espaces à cloisonnement étanche aux gaz (14, 21, 41, 61, 62, 91, 92, 98, 99) comprenant comme suit :
une chambre d'interrupteurs (14, 62, 92) qui comprend un interrupteur de puissance ou interrupteur à coupure en charge (9) et de raccords de câbles (19) reliés électriquement à celui-ci et traversant le blindage, et
une chambre de barres omnibus (21, 41, 61, 91, 98, 99a et b) pour chaque système, qui comprend, pour chaque phase, les barres omnibus (1) et un sectionneur et/ou un interrupteur à trois positions (3) relié a ces dernières, et
ainsi que les deux boulons de traversée (51) reliant électriquement les deux espaces à cloisonnement étanche (14, 21, 41, 61, 62, 91, 92, 98, 99), ce en quoi les pôles (6) de l'interrupteur de puissance ou à coupure en charge (9) relatifs a la face frontale de l'installation de distribution sont disposés l'un à côté de l'autre en ligne droite ou légèrement décalés,
caractérisée par les caractéristiques suivantes :
a) dans chaque chambre de barres omnibus (21, 41, 61, 91, 98, 99a et b) la connexion électrique entre les barres omnibus (1) et le boulon de traversée (51) de chacune des phases se produit en ligne droite et au moins à peu près en angle droit par rapport à l'axe des barres omnibus dans des plan parallèles entre eux,
b) les passages (13) sont échelonnés en diagonale dans la paroi à cloisonnement étanche (12) de manière que les lignes médianes de leurs boulons de traversée (51) présentent dans une direction une distance égale à la distance centrale des barres omnibus (a + d) et dans l'autre direction une distance égale à la distance centrale (p) des pôles (6) de l'interrupteur de puissance ou à coupure en charge (9).
c) dans la chambre d'interrupteurs (14, 62 ,92) la connexion électrique entre les points de jonction supérieurs et/ou inférieurs (59) de l'interrupteur de puissance ou à coupure en charge (9) et les boulons de traversée (51) se produit en ligne droite ou coudée dans des plans parallèles entre eux par phase.

2. Installation de distribution polyphasée à haute tension, remplie de gaz comprimé, à blindage métallique selon la revendication 1,
caractérisée en ce que,
les espaces à cloisonnement étanche (14, 21, 41, 61, 62, 91, 92, 98, 99) de l'installation de distribution sont conçus de préférence sous forme cubique ou parallélépipèdique avec des recouvrements plans (17) et sont séparés les uns des autres par un cloisonnement étanche (12) fabriqué dans une pièce mise à la terre, en ce que chaque espace à cloisonnement étanche (14, 21, 41, 61, 62, 91, 92, 98, 99) présente au moins une ouverture de montage à fermeture étanche aux gaz en période de fonctionnement et en ce que les barres omnibus (1) de chacun des systèmes sont disposées sur des plans au moins à peu près parallèles au recouvrement le plus proche (17).

3. Installation de distribution polyphasée à haute tension, remplie de gaz comprimé, à blindage métallique selon l'une des revendications 1 ou 2,
caractérisée en ce que
la réalisation de base comprend la chambre d'interrupteurs (14, 62, 92) et sur la face arrière de celle-ci la chambre de barres omnibus (21, 61, 91) séparée par le cloisonnement étanche (12) pour un système de barres omnibus simples selon lequel les barres omnibus (1) sont disposées à la hauteur des points de jonction (59) inférieurs ou supérieurs de l'interrupteur de puissance ou à coupure en charge (9) et y sont reliées, alors que des autres points de jonction, des lignes (18) par phase sont guidés aux raccords de câbles (19) de l'installation de distribution et en ce qu'éventuellement dans le blindage de la chambre d'interrupteurs (14) plusieurs ou de préférence une ouverture, des lignes de connexion traversantes (42a, b, c, 84) soient prévues pour la connexion électrique étanche aux gaz avec un ou plusieurs systèmes de barres omnibus supplémentaires logées dans des coffrets séparés en vue de l'agrandissement de l'installation de distribution.

4. Installation de distribution polyphasée à haute tension, remplie de gaz comprimé, à blindage métallique selon la revendication 3,
caractérisée par,
un coffret commun (20, 93) pour la réalisation de base, qui est assemblé de préférence par soudure de pièces en tôle,

5. Installation de distribution polyphasée à haute tension, remplie de gaz comprimé, à blindage métallique selon la revendication 3,
caractérisée en ce que,
la chambre de barres omnibus (61) de la réalisation de base est logée dans un coffret fermé (60), qui avec le cloisonnement étanche (12) touche le coffret séparé (60a) de la chambre d'interrupteurs (62) et ferme celle-ci d'une manière étanche aux gaz pendant le fonctionnement au moyen d'une connexion amovible.

6. Installation de distribution polyphasée à haute tension, remplie de gaz comprimé, à blindage métallique selon l'une des revendications 1 ou 2,
caractérisée en ce que,
chacun des systèmes de barres omnibus prévu pour l'agrandissement de l'installation de distribution est logé dans un autre coffret (40), qui comprend la chambre de barres omnibus (41, 98) séparée par le cloisonnement étanche (12) et un volume partiel (14a, 92a) faisant partie fonctionnellement de la chambre d'interrupteurs (14, 92) avec les lignes de connexion (42a, b, c) à l'interrupteur de puissance ou à coupure en charge (9).

7. Installation de distribution polyphasée à haute tension, remplie de gaz comprimé, à blindage métallique selon l'une des revendications 1 ou 2,
caractérisée en ce que,
deux systèmes de barres omnibus prévus pour l'agrandissement de l'installation de distribution sont logés dans un coffret commun (80), qui contient les deux chambres de barres omnibus (99a, 99b) montées symétriquement, séparées par des cloisonnements étanches (12) et entre celles-ci un volume partiel (14a) faisant partie fonctionnellement de la chambre d'interrupteurs (14), dans laquelle sont disposées les lignes de connexion (84) à la chambre d'interrupteurs (14).

8. Installation de distribution polyphasée à haute tension, remplie de gaz comprimé, à blindage métallique selon l'une des revendications 3, 4 ou 5,
caractérisée en ce que,
la chambre d'interrupteurs (14, 62, 92) dans la zone touchant la chambre de barres omnibus (21, 61, 91) présente une profondeur inférieure à celle dans la zone comprenant les raccords de câbles (19).

9. Installation de distribution polyphasée à haute tension, remplie de gaz comprimé, A blindage métallique selon les revendications 4 et 8,
caractérisée en ce que,
le cloisonnement étanche (12) du coffret commun (20, 93) est fabriqué dans une partie en tôle coudée.

10. Installation de distribution polyphasée à haute tension, remplie de gaz comprimé, à blindage métallique selon l'une des revendications de 1 à 5,
caractérisée en ce que,
l'interrupteur de puissance ou à coupure en charge (9) avec son entraînement (24) peut être monté dans l'ouverture de montage sur la face frontale de la chambre d'interrupteurs (14), de façon que des contacts à fiches (27) établissent la connexion aux barres omnibus (1) et aux raccords de câbles (19) et que des baguettes d'étanchéité produisent la fermeture étanche aux gaz sur le cadre de base (25) de l'entraînement (24).

11. Installation de distribution polyphasée à haute tension, remplie de gaz comprimé, à blindage métallique selon l'une des revendications de 1 à 10,
caractérisée en ce que,
des parois séparatrices (22, 32, 96) sous-divisent par phase chaque espace à cloisonnement étanche (14, 14a, 21, 41, 61, 62, 91, 92, 98, 99a et b) et présentent alors aux endroits d'intensité électrique de champ plus faible des ouvertures de jonction (35) entre les espaces partiels et en ce que les parois séparatrices (22, 32, 96) touchent des deux côtés le cloisonnement étanche (12) en le raidissant ou bien y sont reliées par exemple par soudure.

12. Installation de distribution polyphasée à haute tension, remplie de gaz comprimé, A blindage métallique selon la revendication 1,
caractérisée en ce que,
les plans de pivotement des interrupteurs à trois positions et/ou des sectionneurs (3) coincident par phase avec les plans formés par les axes des barres omnibus (1), par les trajectoires de courant des interrupteurs à trois positions et des sectionneurs (3) et par les lignes médianes des boulons de traversée (51), ou courent parallèlement à une faible distance.

13. Installation de distribution polyphasée à haute tension, remplie de gaz comprimé, à blindage métallique selon la revendication 1 et 12,
caractérisée en ce que,
les interrupteurs A trois positions et/ou les sectionneurs (3) des phases externes sont mobiles dans le sens de pivotement opposé.

14. Installation de distribution polyphasée à haute tension, remplie de gaz comprimé, à blindage métallique selon la revendication 13,
caractérisée en ce que,
un premier arbre (71) pour l'entraînement de deux interrupteurs A trois positions et/ou sectionneurs voisins (3) est introduit par l'extérieur dans chaque chambre de barres omnibus (21, 41) et est de plus logé dans l'une des parois séparatrices (22) et qu'un deuxième arbre (77) est logé dans la même paroi (22) et se déplace dans le sens rotatif opposé au moyen d'une transmission du premier axe (71), entraînant alors le troisième interrupteur dans la direction opposée de pivotement.

15. Installation de distribution polyphasée à haute tension, remplie de gaz comprimé, à blindage métallique selon revendication 14,
caractérisée en ce que,
un mécanisme à quatre articulations muni d'un écran (78) de protection monté sur l'une des parois séparatrices (22) effectue le transfert de mouvement du premier sur le second arbre.

16. Installation de distribution polyphasée à haute tension, remplie de gaz comprimé, à blindage métallique selon l'une des revendications de 1 à 7,
caractérisée en ce que,
les barres omnibus (1) sont fixées dans les parois latérales de l'installation de distribution dans des passages (82).

17. Installation de distribution polyphasée à haute tension, remplie de gaz comprimé, à blindage métallique selon l'une des revendications 3, 4, 5, 8, ou 10
caractérisée en ce que,
les raccords de câbles (19) sont disposés par phase en triangle et/ou relatifs à la face frontale de l'installation, échelonnés en diagonale.

18. Installation de distribution polyphasée à haute tension, remplie de gaz comprimé, à blindage métallique selon l'une des revendications 3, 4, 5, 8, 10 ou 17
caractérisée en ce que,
par phase, deux ou plusieurs raccords de câbles (19) sont prévus.

19. Installation de distribution polyphasée à haute tension, remplie de gaz comprimé, A blindage métallique selon les revendications 1 à 5,
caractérisée en ce que,
dans la chambre d'interrupteurs (14, 62, 92) sont prévus des points de jonction par phase, par exemple des fiches femelles (31) pour des transformateurs de tension ou similaires.

20. Installation de distribution polyphasée à haute tension, remplie de gaz comprimé, à blindage métallique selon l'une des revendications 3, 4 ou 5 ainsi que 8, 10, 17 et 18,
caratérisée en ce que,
les raccords de câbles (19) dans leur réalisation de base sont disposés au-dessus de la chambre de barres omnibus sur la face arrière de l'installation de distribution avec une orientation verticale ou horizontale de raccordement des connecteurs (29).

21. Installation de distribution polyphasée à haute tension, remplie de gaz comprimé, à blindage métallique selon l'une des revendications 1, 17, 18, ou 20
caractérisée en ce que,
l'installation de distribution présente un blindage monophasé dans la zone des raccords de câbles (19).

22. Installation de distribution polyphasée à haute tension, remplie de gaz comprimé, à blindage métallique selon la revendication 21,
caractérisée en ce que,
les blindages monophasés sont de forme cylindrique et sont conçus comme support des enroulements secondaires des transformateurs de courant (30).

23. Installation de distribution polyphasée à haute tension, remplie de gaz comprimé, A blindage métallique selon les revendications 1 et 17, 18, 20 à 22,
caractérisée en ce que,
les raccords de câbles (19) sont séparés d'une manière étanche aux gaz du reste de la chambre d'interrupteurs (14, 62, 92) par une paroi supplémentaire à cloisonnement étanche et sont accessibles par leur propre ouverture de montage.

24. Installation de distribution polyphasée à haute tension, remplie de gaz comprimé, à blindage métallique selon l'une des revendications 1, 3 ou 10
caractérisée en ce que,
des interrupteurs à vide sont prévus en tant qu'interrupteurs de puissance ou à coupure en charge (9).

25. Installation de distribution polyphasée à haute tension, remplie de gaz comprimé, à blindage métallique selon l'une des revendications 1, 3 ou 10
caractérisée en ce que,
un gaz isolant comme le SF6 est prévu comme moyen d'extinction pour les interrupteurs de puissance ou à coupure en charge.
